# EUROPEAN PATENT APPLICATION

(11) **EP 4 482 204 A1**
(43) Date of publication of application: **25.12.2024**
(21) Application number: 22926502.0
(22) Date of filing: 18.02.2022
(51) Int. Cl.: H04W 28/20

(54) **BANDWIDTH PART CONFIGURATION METHOD AND APPARATUS, DEVICE, AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Stöckeler, Ferdinand
(86) International application number: PCT/CN2022/076970
(87) International publication number: WO 2023/155175

(57) **Abstract**

The present invention provides a bandwidth part (BWP) configuration method and apparatus, a device, and a storage medium. The method is executed by user equipment, and comprises: in response to the user equipment being configured with multiple initial downlink BWPs, determining one of the multiple initial downlink BWPs as a default BWP, wherein the default BWP is a target BWP to which the user equipment is switched in response to the first timer expiring. When the user equipment does not receive scheduling DCI for a long time, the user equipment is switched to the initial downlink BWP having a narrower bandwidth, such that the power consumption of the user equipment can be reduced, so as to be more suitable for a 5G NR-lite system.

## Description

### FIELD

The present invention relates to the field of wireless communication technology, and in particular, to a method, apparatus and device for configuring a bandwidth part, and a storage medium.

### BACKGROUND

In a long term evolution (LTE) 4G wireless communication system, in order to support Internet of Thing (IoT) services, two techniques are proposed, generally referred to as machine type communication (MTC) and narrow band Internet of Thing (NB-IoT). These two techniques are mainly targeted at scenarios with low rate of data transmission and high delay, such as meter reading, environmental monitoring, and other scenarios. At present, the NB-IoT can only support a maximum rate of several hundred kbps, and the MTC can only support a maximum rate of several Mbps. On the other hand, with the continuous development and popularization of the IoT services, such as video monitoring, smart home, wearable devices, and industrial sensor monitoring, these services generally require a higher data transmission rate of tens to 100 Mbps, and at the same time, they put forward a higher requirement for delay. Therefore, it is difficult for the MTC and NB-IoT techniques in the LTE to meet these requirements. Under this circumstance, some companies have proposed to design a new user equipment in the 5G New Radio (NR) wireless communication system to meet the requirements of these mid-range IoT devices. In the current 3GPP standardization, this new type of terminal is referred to as a reduced capability (RedCap) terminal or an NR-lite terminal for short.

### SUMMARY

In view of above, the present invention provides a method, apparatus and device for configuring a bandwidth part, and a storage medium.

According to a first aspect of embodiments of the present invention, there is provided a method for configuring a bandwidth part. The method is performed by a user equipment, and includes: in response to the user equipment being configured with a plurality of initial downlink bandwidth parts (BWPs), determining one of the plurality of initial downlink BWPs as a default BWP. The default BWP is a target BWP to which the user equipment is to be switched in response to expiration of a first timer.

In an embodiment, determining one of the plurality of initial downlink BWPs as the default BWP includes: determining one of the plurality of initial downlink BWPs as the default BWP according to configuration of an uplink BWP of the user equipment.

In an embodiment, determining one of the plurality of initial downlink BWPs as the default BWP includes: in response to the user equipment being configured with one initial uplink BWP, determining a first initial downlink BWP that has a correspondence with the initial uplink BWP as the default BWP. The first initial downlink BWP is one of the plurality of initial downlink BWPs.

In an embodiment, the correspondence is that the initial uplink BWP and the first initial downlink BWP have the same center frequency point.

In an embodiment, the correspondence is that the initial uplink BWP includes a random access channel configured for the user equipment for sending random access information, and the first initial downlink BWP includes a physical layer channel and a random access search space configured for the user equipment. The physical layer channel is used to carry a random access response corresponding to the random access information.

In an embodiment, determining one of the plurality of initial downlink BWPs as the default BWP includes: in response to the plurality of initial downlink BWPs including an initial downlink BWP configured by a network device via a master information block (MIB), determining the initial downlink BWP configured via the MIB as the default BWP.

In an embodiment, determining the initial downlink BWP configured via the MIB as the default BWP includes: in response to the user equipment being configured with an uplink BWP that has a correspondence with the initial downlink BWP configured via the MIB, determining the initial downlink BWP configured via the MIB as the default BWP.

In an embodiment, the correspondence is that the uplink BWP and the initial downlink BWP configured via the MIB have the same center frequency point.

In an embodiment, the correspondence is that the uplink BWP includes a random access channel configured for the user equipment for sending random access information, and the initial downlink BWP configured via the MIB includes a physical layer channel and a random access search space configured for the user equipment. The physical layer channel is used to carry a random access response corresponding to the random access information.

In an embodiment, determining one of the plurality of initial downlink BWPs as the default BWP includes: in response to the plurality of initial downlink BWPs including an initial downlink BWP configured by a network device via an MIB, determining the initial downlink BWP configured via the MIB as the default BWP.

In an embodiment, the first timer is used to time a duration during which the user equipment does not receive downlink control information for scheduling on an active BWP.

According to a second aspect of embodiments of the present invention, there is provided a method for configuring a bandwidth part. The method is performed by a network device, and includes: in response to a user equipment being configured with a plurality of initial downlink bandwidth parts (BWPs), determining one of the plurality of initial downlink BWPs as a default BWP. The default BWP is a target BWP to which the user equipment is to be switched in response to expiration of a first timer.

In an embodiment, determining one of the plurality of initial downlink BWPs as the default BWP includes: determining one of the plurality of initial downlink BWPs as the default BWP according to configuration of an uplink BWP of the user equipment.

In an embodiment, determining one of the plurality of initial downlink BWPs as the default BWP includes: in response to the user equipment being configured with one initial uplink BWP, determining a first initial downlink BWP that has a correspondence with the initial uplink BWP as the default BWP. The first initial downlink BWP is one of the plurality of initial downlink BWPs.

In an embodiment, the correspondence is that the initial uplink BWP and the first initial downlink BWP have the same center frequency point.

In an embodiment, the correspondence is that the initial uplink BWP includes a random access channel configured for the user equipment for sending random access information, and the first initial downlink BWP includes a physical layer channel and a random access search space configured for the user equipment. The physical layer channel is used to carry a random access response corresponding to the random access information.

In an embodiment, determining one of the plurality of initial downlink BWPs as the default BWP includes: in response to the plurality of initial downlink BWPs including an initial downlink BWP configured by the network device via a master information block (MIB), determining the initial downlink BWP configured via the MIB as the default BWP.

In an embodiment, determining the initial downlink BWP configured via the MIB as the default BWP includes: in response to the user equipment being configured with an uplink BWP that has a correspondence with the initial downlink BWP configured via the MIB, determining the initial downlink BWP configured via the MIB as the default BWP.

In an embodiment, the correspondence is that the uplink BWP and the initial downlink BWP configured via the MIB have the same center frequency point.

In an embodiment, the correspondence is that the uplink BWP includes a random access channel configured for the user equipment for sending random access information, and the initial downlink BWP configured via the MIB includes a physical layer channel and a random access search space configured for the user equipment. The physical layer channel is used to carry a random access response corresponding to the random access information.

In an embodiment, determining one of the plurality of initial downlink BWPs as the default BWP includes: in response to the plurality of initial downlink BWPs including an initial downlink BWP configured by the network device via an MIB, determining the initial downlink BWP configured via the MIB as the default BWP.

In an embodiment, the first timer is used to time a duration during which the user equipment does not receive downlink control information for scheduling on an active BWP.

According to a third aspect of embodiments of the present invention, there is provided an apparatus for configuring a bandwidth part. The apparatus is applicable to a user equipment, and includes a processing module. The processing module is configured to: in response to the user equipment being configured with a plurality of initial downlink bandwidth parts (BWPs), determine one of the plurality of initial downlink BWPs as a default BWP. The default BWP is a target BWP to which the user equipment is to be switched in response to expiration of a first timer.

According to a fourth aspect of embodiments of the present invention, there is provided an apparatus for configuring a bandwidth part. The apparatus is applicable to a network device, and includes a processing module. The processing module is configured to: in response to a user equipment being configured with a plurality of initial downlink bandwidth parts (BWPs), determine one of the plurality of initial downlink BWPs as a default BWP. The default BWP is a target BWP to which the user equipment is to be switched in response to expiration of a first timer.

According to a fifth aspect of embodiments of the present invention, there is provided a mobile terminal. The mobile terminal includes: a processor; and a memory for storing instructions executable by the processor. The processor is configured to execute the executable instructions in the memory to implement the steps of the method for configuring a bandwidth part as described above.

According to a sixth aspect of embodiments of the present invention, there is provided a network device. The network device includes: a processor; and a memory for storing instructions executable by the processor. The processor is configured to execute the executable instructions in the memory to implement the steps of the method for configuring a bandwidth part as described above.

According to a seventh aspect of embodiments of the present invention, there is provided a non-transitory computer-readable storage medium having stored therein executable instructions that, when executed by a processor, cause the step of the method for configuring a bandwidth part as described above to be implemented.

Technical solutions according to embodiments of the present invention may include the following beneficial effects:

By determining the default BWP to which the user equipment is to be switched, the user equipment switches to an initial downlink BWP with a narrower bandwidth when the user equipment does not receive DCI for scheduling for a long time, which can reduce the power consumption of the user equipment, making the user equipment more applicable to a 5G NR-lite system.

It should be appreciated that, the general description hereinbefore and the detail description hereinafter are explanatory and illustrative, and shall not be construed to limit the present invention.

### BRIEF DESCRIPTION OF THE DRAWINGS

The accompanying drawings described here serve to provide a further understanding of embodiments of the present invention and constitute a part of the present application. The illustrative examples of embodiments of the present invention and their descriptions are intended to explain embodiments of the present invention and do not constitute an undue restriction on embodiments of the present invention, in which:

The accompanying drawings, which are incorporated in and constitute a part of this specification, illustrate examples consistent with embodiments of the present invention and, together with the description, serve to explain the principles of the present invention.
FIG. 1 is a schematic flowchart showing a method for configuring a bandwidth part according to an illustrative embodiment;
FIG. 2 is a schematic flowchart showing a method for configuring a bandwidth part according to an illustrative embodiment;
FIG. 3 is a schematic flowchart showing a method for configuring a bandwidth part according to an illustrative embodiment;
FIG. 4 is a schematic flowchart showing a method for configuring a bandwidth part according to an illustrative embodiment;
FIG. 5 is a schematic flowchart showing a method for configuring a bandwidth part according to an illustrative embodiment;
FIG. 6 is a schematic flowchart showing a method for configuring a bandwidth part according to an illustrative embodiment;
FIG. 7 is a schematic flowchart showing a method for configuring a bandwidth part according to an illustrative embodiment;
FIG. 8 is a schematic flowchart showing a method for configuring a bandwidth part according to an illustrative embodiment;
FIG. 9 is a schematic flowchart showing a method for configuring a bandwidth part according to an illustrative embodiment;
FIG. 10 is a schematic flowchart showing a method for configuring a bandwidth part according to an illustrative embodiment;
FIG. 11 is a schematic flowchart showing a method for configuring a bandwidth part according to an illustrative embodiment;
FIG. 12 is a schematic flowchart showing a method for configuring a bandwidth part according to an illustrative embodiment;
FIG. 13 is a schematic block diagram of an apparatus for configuring a bandwidth part according to an illustrative embodiment;
FIG. 14 is a schematic block diagram of an apparatus for configuring a bandwidth part according to an illustrative embodiment;
FIG. 15 is a schematic structural diagram of an apparatus for configuring a bandwidth part according to an illustrative embodiment; and
FIG. 16 is a schematic structural diagram of an apparatus for configuring a bandwidth part according to an illustrative embodiment.

### DETAILED DESCRIPTION

Embodiments of the present invention will now be further described with reference to the accompanying drawings and specific implementations.

Reference will now be made in detail to illustrative embodiments, examples of which are illustrated in the accompanying drawings. The following description refers to the accompanying drawings in which the same numbers in different drawings represent the same or similar elements unless otherwise represented. The implementations described in the following illustrative embodiments do not represent all possible implementations consistent with embodiments of the present invention. Instead, they are merely examples of apparatuses and methods consistent with some aspects of the present invention as recited in the appended claims.

It should be noted that an embodiment of the present invention may include a plurality of steps; and for convenience of description, these steps are numbered; however, these numbers do not constitute restrictions on execution time slots and execution order of the steps; and these steps can be implemented in any order, which are not limited in embodiments of the present invention.

Although terms like first, second, third, etc. may be used in embodiments of the present invention for describing various information, these information should not be limited by these terms, and these terms are only used for distinguishing information of the same type from each other.

Similar to an IoT device in LTE, a 5G NR-lite based terminal generally needs to meet the requirements of low cost, low complexity, a certain degree of coverage enhancement, and power saving.

Since the current NR technology is designed for high-end terminals with high rate and low delay, the current design cannot meet the above requirements of the NR-lite device. Therefore, it is necessary to modify the current NR system to meet the requirements of the NR-lite device. For example, in order to meet the requirements of low cost and low complexity, a radio frequency (RF) bandwidth of the NR-IoT may be limited, for example, to 5 MHz or 10 MHz, or a size of a buffer of the NR-lite is limited, so as to limit the size of the transmission block received each time. For power saving, a possible optimization direction is to simplify a communication process and reduce the number of times that a NR-lite user detects a downlink control channel.

In the NR system, a serving cell may be configured with a bandwidth part (BWP) inactivity timer. Within the time range specified by the timer, if a user equipment does not receive downlink control information (DCI) for scheduling on an active BWP, the user equipment needs to be switched to a default BWP. The default BWP may be configured by a network. If the network does not configure the default BWP for the user equipment, the user equipment is switched to an initial downlink BWP. In a possible implementation, the user equipment may be configured with one or more (a plurality of) initial downlink BWPs according to configuration of a device at the network side or a communication protocol. In embodiments of the present invention, "a plurality of' means two or more.

The solution provided in the present invention may be applied to an NR-lite terminal, and of course may also be applied to other types of terminals.

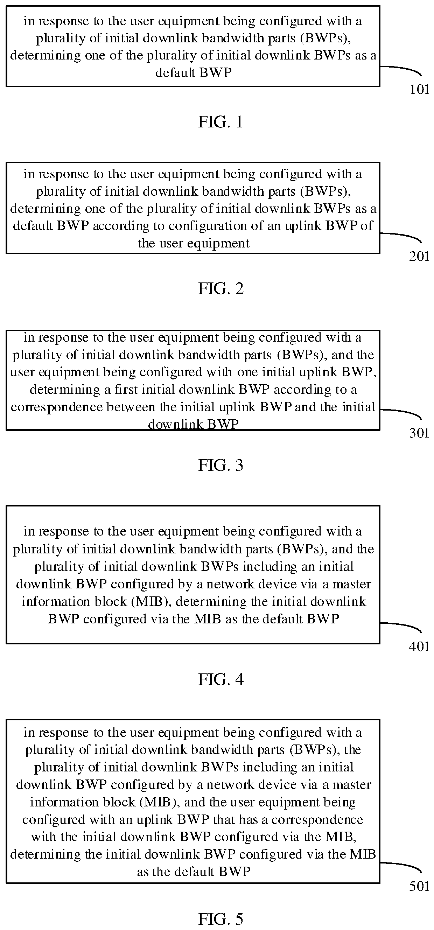

Embodiments of the present invention provide a method for configuring a bandwidth part, which is performed by a user equipment. FIG. 1 is a schematic flowchart showing a method for configuring a bandwidth part according to an illustrative embodiment. As shown in FIG. 1, the method includes a flowing step.

In step 101, in response to the user equipment being configured with a plurality of initial downlink bandwidth parts (BWPs), one of the plurality of initial downlink BWPs is determined as the default BWP. The default BWP is a target BWP to which the user equipment is to be switched in response to expiration of a first timer.

In embodiments of the present invention, the user equipment typically may be an NR-lite device.

The target BWP refers to a BWP to which the user equipment is to be switched when the first timer expires, and may also be referred to as a switching BWP.

In an embodiment, in a scenario where the user equipment is configured with a plurality of initial downlink BWPs, the user equipment determines one of the plurality of initial downlink BWPs as the default BWP. The default BWP is the target BWP to which the user equipment is to be switched when the first timer expires.

In an embodiment, in a scenario where an NR-lite-based user equipment is configured with a plurality of initial downlink BWPs, the user equipment determines one of the plurality of initial downlink BWPs as the default BWP. The default BWP is the target BWP to which the user equipment is to be switched when the first timer expires.

In an embodiment, the first timer is used to time a duration during which the user equipment does not receive downlink control information for scheduling on an active BWP. In an embodiment, the first timer is a BWP-inactivity timer. When DCI is received by the user equipment on the active BWP, the first timer starts. In response to new DCI being received before the first timer expires, the first timer restarts. In response to new DCI not being received when the first timer expires, the user equipment performs BWP switching. Alternatively, the first timer starts when the user equipment is on the active BWP, and in response to DCI not being received when the first timer expires, the user equipment performs BWP switching. That is, the first timer is used to record the length of time during which the user equipment does not receive the DCI. The timing duration of the first timer may be configured by a network device or may be determined according to a communication protocol.

In an embodiment, in a case where the duration during which the user equipment does not receive the downlink control information (DCI) for scheduling on the active BWP reaches a specified range of time, for example, the timer (such as the BWP-inactivity timer) expires, the user equipment needs to be switched to the default BWP, if the network does not configure a default BWP for the user equipment, and the user equipment is configured with a plurality of initial downlink BWPs, the user equipment determines one of the plurality of initial downlink BWPs as the default BWP, and switches to the determined default BWP.

In the above embodiments, when the user equipment does not receive the DCI for scheduling for a long time, it switches to an initial downlink BWP with a narrower bandwidth, which can reduce the power consumption of the user equipment, making the user equipment more applicable to the 5G NR-lite system. Here, the narrower bandwidth means that the bandwidth of the initial downlink BWP is smaller than that of the active downlink BWP. Alternatively, the narrower bandwidth means that the bandwidth of the initial downlink BWP is smaller than a threshold.

Embodiments of the present invention provide a method for configuring a bandwidth part, which is performed by a user equipment. FIG. 2 is a schematic flowchart showing a method for configuring a bandwidth part according to an illustrative embodiment. As shown in FIG. 2, the method includes a flowing step.

In step 201, in response to the user equipment being configured with a plurality of initial downlink bandwidth parts (BWPs), one of the plurality of initial downlink BWPs is determined as the default BWP according to configuration of an uplink BWP of the user equipment. The default BWP is a target BWP to which the user equipment is to be switched in response to expiration of a first timer.

In an embodiment, in a scenario where the user equipment is configured with a plurality of initial downlink BWPs, the user equipment determines one of the plurality of initial downlink BWPs as the default BWP according to the configuration of its uplink BWP. The default BWP is the target BWP to which the user equipment is to be switched in a scenario where the first timer expires.

In an embodiment, the communication system is a time division duplex (TDD) based system, and when the user equipment performs BWP switching, both the uplink BWP and the downlink BWP need to be switched. Therefore, in the scenario where the user equipment is configured with a plurality of initial downlink BWPs, the user equipment determines one of the plurality of initial downlink BWPs as the default BWP according to the configuration of its uplink BWP. The default BWP is the target BWP to which the user equipment is to be switched in the scenario where the first timer expires. In this scenario, the default BWP and the target BWP both refer to a downlink BWP to which the user equipment is to be switched.

In the above embodiments, when the user equipment does not receive the DCI for scheduling for a long time, it switches to an initial downlink BWP with a narrower bandwidth, which can reduce the power consumption of the user equipment, making the user equipment more applicable to the 5G NR-lite system. Moreover, in the scenario where the user equipment is configured with a plurality of initial downlink BWPs, the default BWP to be switched to is determined according to the configuration of its uplink BWP.

Embodiments of the present invention provide a method for configuring a bandwidth part, which is performed by a user equipment. FIG. 3 is a schematic flowchart showing a method for configuring a bandwidth part according to an illustrative embodiment. As shown in FIG. 3, the method includes a flowing step.

In step 301, in response to the user equipment being configured with a plurality of initial downlink bandwidth parts (BWPs) and the user equipment being configured with one initial uplink BWP, a corresponding first initial downlink BWP is determined according to a correspondence between the initial uplink BWP and the initial downlink BWP. The first initial downlink BWP is the default BWP. The first initial downlink BWP is one of the plurality of initial downlink BWPs; and the default BWP is a target BWP to which the user equipment is to be switched in response to expiration of a first timer.

In some possible implementations, the user equipment may determine the default BWP according to the correspondence between the initial uplink BWP and the initial downlink BWP. For example, based on a correspondence configured by the network side, or based on a corresponding correspondence, or based on a correspondence determined by a communication protocol; the user equipment can determine the first initial downlink BWP according to the correspondence, and use the first initial downlink BWP as the default BWP.

In an embodiment, in a scenario where the user equipment is configured with a plurality of initial downlink BWPs, and the user equipment is configured with one initial uplink BWP, a first initial downlink BWP that has a correspondence with the initial uplink BWP is determined as the default BWP. The default BWP is the target BWP to which the user equipment is to be switched in a scenario where the first timer expires. Here, the first initial downlink BWP is one of the plurality of initial downlink BWPs, and the first initial downlink BWP does not indicate its order in the plurality of initial downlink BWPs.

In an embodiment, in a scenario where the user equipment is configured with a plurality of initial downlink BWPs, and the user equipment is configured with one initial uplink BWP, one of the plurality of initial downlink BWPs that has the same center frequency point as the initial uplink BWP is determined as the default BWP. The default BWP is the target BWP to which the user equipment is to be switched when the first timer expires.

In an embodiment, in a scenario where the user equipment is configured with a plurality of initial downlink BWPs, and the user equipment is configured with one initial uplink BWP, one of the plurality of initial downlink BWPs that has a following relationship with the initial uplink BWP is determined as the default BWP: the initial uplink BWP includes a random access channel configured for the user equipment for sending random access information, and the initial downlink BWP includes a physical layer channel and a random access search space configured for the user equipment. The physical layer channel is used to carry a random access response corresponding to the random access information. The default BWP is the target BWP to which the user equipment is to be switched when the first timer expires.

In the above embodiments, when the user equipment does not receive the DCI for scheduling for a long time, it switches to an initial downlink BWP with a narrower bandwidth, which can reduce the power consumption of the user equipment, making the user equipment more applicable to the 5G NR-lite system. Moreover, in the scenario where the user equipment is configured with a plurality of initial downlink BWPs, the default BWP to be switched to is determined according to the configuration of its uplink BWP.

Embodiments of the present invention provide a method for configuring a bandwidth part, which is performed by a user equipment. FIG. 4 is a schematic flowchart showing a method for configuring a bandwidth part according to an illustrative embodiment. As shown in FIG. 4, the method includes a flowing step.

In step 401, in response to the user equipment being configured with a plurality of initial downlink bandwidth parts (BWPs), and the plurality of initial downlink BWPs including an initial downlink BWP configured by a network device via a master information block (MIB), the initial downlink BWP configured via the MIB is determined as the default BWP. The default BWP is a target BWP to which the user equipment is to be switched in response to expiration of a first timer.

In an embodiment, in a scenario where the user equipment is configured with a plurality of initial downlink BWPs, and the plurality of initial downlink BWPs include an initial downlink BWP configured by the network device via the master information block (MIB), the initial downlink BWP configured via the MIB is determined as the default BWP. The default BWP is the target BWP to which the user equipment is to be switched when the first timer expires.

In an embodiment, the communication system is an FDD-based system, and in a scenario where the user equipment is configured with a plurality of initial downlink BWPs, and the plurality of initial downlink BWPs include an initial downlink BWP configured by the network device via the master information block (MIB), the initial downlink BWP configured via the MIB is determined as the default BWP. The default BWP is the target BWP to which the user equipment is to be switched when the first timer expires.

In the above embodiments, when the user equipment does not receive the DCI for scheduling for a long time, it switches to an initial downlink BWP with a narrower bandwidth, which can reduce the power consumption of the user equipment, making the user equipment more applicable to the 5G NR-lite system. Moreover, in the scenario where the user equipment is configured with a plurality of initial downlink BWPs, the default BWP to be switched to is determined according to the configuration of its uplink BWP.

Embodiments of the present invention provide a method for configuring a bandwidth part, which is performed by a user equipment. FIG. 5 is a schematic flowchart showing a method for configuring a bandwidth part according to an illustrative embodiment. As shown in FIG. 5, the method includes a flowing step.

In step 501, in response to the user equipment being configured with a plurality of initial downlink bandwidth parts (BWPs), the plurality of initial downlink BWPs including an initial downlink BWP configured by a network device via a master information block (MIB), and the user equipment being configured with an uplink BWP that has a correspondence with the initial downlink BWP configured via the MIB, the initial downlink BWP configured via the MIB is determined as a default BWP. The default BWP is a target BWP to which the user equipment is to be switched in response to expiration of a first timer.

The correspondence may be as described in other embodiments of the present invention, and will not be elaborated here.

In an embodiment, in a scenario where the user equipment is configured with a plurality of initial downlink BWPs, and the plurality of initial downlink BWPs include an initial downlink BWP configured by the network device via the master information block (MIB), when the user equipment is configured with an uplink BWP that has a correspondence with the initial downlink BWP configured via the MIB, the initial downlink BWP configured via the MIB is determined as the default BWP. The default BWP is the target BWP to which the user equipment is to be switched when the first timer expires.

In an embodiment, the communication system is an FDD-based system. In a scenario where the user equipment is configured with a plurality of initial downlink BWPs, and the plurality of initial downlink BWPs include an initial downlink BWP configured by the network device via the master information block (MIB), when the user equipment is configured with an uplink BWP that has a correspondence with the initial downlink BWP configured via the MIB, the initial downlink BWP configured via the MIB is determined as the default BWP. The correspondence is that the initial downlink BWP configured via the MIB and the uplink BWP have the same center frequency point. The default BWP is the target BWP to which the user equipment is to be switched when the first timer expires.

In an embodiment, the communication system is an FDD-based system. In a scenario where the user equipment is configured with a plurality of initial downlink BWPs, and the plurality of initial downlink BWPs include an initial downlink BWP configured by the network device via the master information block (MIB), when the user equipment is configured with an uplink BWP that has a correspondence with the initial downlink BWP configured via the MIB, the initial downlink BWP configured via the MIB is determined as the default BWP. The correspondence is that the initial uplink BWP includes a random access channel configured for the user equipment for sending random access information, and the initial downlink BWP configured via the MIB includes a physical layer channel and a random access search space configured for the user equipment. The physical layer channel is used to carry a random access response corresponding to the random access information.

In the above embodiments, when the user equipment does not receive the DCI for scheduling for a long time, it switches to an initial downlink BWP with a narrower bandwidth, which can reduce the power consumption of the user equipment, making the user equipment more applicable to the 5G NR-lite system. Moreover, in the scenario where the user equipment is configured with a plurality of initial downlink BWPs, the default BWP to be switched to is determined according to the configuration of its uplink BWP.

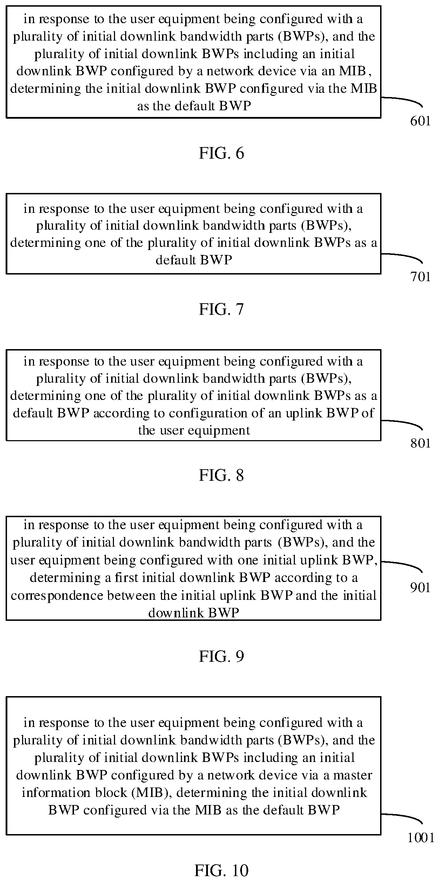

Embodiments of the present invention provide a method for configuring a bandwidth part, which is performed by a user equipment. FIG. 6 is a schematic flowchart showing a method for configuring a bandwidth part according to an illustrative embodiment. As shown in FIG. 6, the method includes a flowing step.

In step 601, in response to the user equipment being configured with a plurality of initial downlink bandwidth parts (BWPs), and the plurality of initial downlink BWPs including an initial downlink BWP configured by a network device via an MIB, the initial downlink BWP configured via the MIB is determined as the default BWP. The default BWP is a target BWP to which the user equipment is to be switched in response to expiration of a first timer.

In an embodiment, in a scenario where the user equipment is configured with a plurality of initial downlink bandwidth parts (BWPs), and the plurality of initial downlink BWPs include an initial downlink BWP configured by the network device via the master information block (MIB), the initial downlink BWP configured via the MIB is determined as the default BWP. The default BWP is the target BWP to which the user equipment is to be switched when the first timer expires.

In an embodiment, the communication system is a frequency division duplex (FDD)-based system, and the user equipment does not need to switch the uplink BWP when performing BWP switching. Therefore, in a scenario where the user equipment is configured with a plurality of initial downlink BWPs, and the plurality of initial downlink BWPs include an initial downlink BWP configured by the network device via the master information block (MIB), the initial downlink BWP configured via the MIB is determined as the default BWP. The default BWP is the target BWP to which the user equipment is to be switched when the first timer expires. In this scenario, there is no need to determine the default BWP according to the configuration of the uplink BWP of the user equipment.

In the above embodiments, when the user equipment does not receive the DCI for scheduling for a long time, it switches to an initial downlink BWP with a narrower bandwidth, which can reduce the power consumption of the user equipment, making the user equipment more applicable to the 5G NR-lite system. The narrower bandwidth means that the bandwidth of the initial downlink BWP is smaller than that of the active downlink BWP. Alternatively, the narrower bandwidth means that the bandwidth of the initial downlink BWP is smaller than a threshold.

Embodiments of the present invention provide a method for configuring a bandwidth part. The method is performed by a user equipment, and includes: in response to the user equipment being configured with a plurality of initial downlink bandwidth parts (BWPs), one of the plurality of initial downlink BWPs is determined as a default BWP. The default BWP is a target BWP to which the user equipment is to be switched in response to expiration of a first timer. The first timer is used to start timing when the user equipment receives downlink control information (DCI) for scheduling on an active BWP, and used to determine whether DCI is received within the timing duration of the first timer.

When the DCI is received by the user equipment on the active BWP, the first timer starts. In response to new DCI being received before the first timer expires, the first timer restarts. In response to new DCI not being received when the first timer expires, the user equipment performs BWP switching. Alternatively, the first timer starts when the user equipment is on the active BWP, and in response to DCI not being received when the first timer expires, the user equipment performs the BWP switching. That is, the first timer is used to record the length of time during which the user equipment does not receive the DCI. In an embodiment, in a case where a duration during which the user equipment does not receive the downlink control information (DCI) for scheduling on the active BWP reaches a specified range of time, in response to the user equipment being configured with a plurality of initial downlink BWPs, the user equipment determines one of the plurality of initial downlink BWPs as the default BWP, and switches to the determined default BWP.

In an embodiment, the first timer is a BWP-inactivity timer.

In the above embodiments, when the user equipment does not receive the DCI for scheduling for a long time, it switches to an initial downlink BWP with a narrower bandwidth, which can reduce the power consumption of the user equipment, making the user equipment more applicable to the 5G NR-lite system.

Embodiments of the present invention provide a method for configuring a bandwidth part, which is performed by a network device. FIG. 7 is a schematic flowchart showing a method for configuring a bandwidth part according to an illustrative embodiment. As shown in FIG. 7, the method includes a flowing step.

In step 701, in response to a user equipment being configured with a plurality of initial downlink bandwidth parts (BWPs), one of the plurality of initial downlink BWPs is determined as a default BWP. The default BWP is a target BWP to which the user equipment is to be switched in response to expiration of a first timer.

In embodiments of the present invention, the user equipment typically may be an NR-lite device. In embodiments of the present invention, the network device typically may be a base station.

In an embodiment, in a scenario where the user equipment is configured with a plurality of initial downlink BWPs, the network device determines one of the plurality of initial downlink BWPs as the default BWP. The default BWP is the target BWP to which the user equipment is to be switched when the first timer expires.

In an embodiment, in a scenario where an NR-lite-based user equipment is configured with a plurality of initial downlink BWPs, the network device determines one of the plurality of initial downlink BWPs as the default BWP. The default BWP is the target BWP to which the user equipment is to be switched when the first timer expires.

In an embodiment, the first timer is used to time a duration during which the user equipment does not receive downlink control information (DCI) for scheduling on an active BWP. In an embodiment, the first timer is a BWP-inactivity timer. When DCI is received by the user equipment on the active BWP, the first timer starts. In response to new DCI being received before the first timer expires, the first timer restarts. In response to new DCI not being received when the first timer expires, the user equipment performs BWP switching. Alternatively, the first timer starts when the user equipment is on the active BWP, and in response to DCI not being received when the first timer expires, the user equipment performs BWP switching. That is, the first timer is used to record the length of time during which the user equipment does not receive the DCI. The timing duration of the first timer may be configured by the network device or may be determined according to a communication protocol.

In an embodiment, in a case where the duration during which the user equipment does not receive the downlink control information (DCI) for scheduling on the active BWP reaches a specified range of time, for example, the timer (such as the BWP-inactivity timer) expires, the user equipment needs to be switched to the default BWP, if the network does not configure a default BWP for the user equipment, and the user equipment is configured with a plurality of initial downlink BWPs, the network device determines one of the plurality of initial downlink BWPs as the default BWP.

In the above embodiments, when the user equipment does not receive the DCI for scheduling for a long time, it switches to an initial downlink BWP with a narrower bandwidth, which can reduce the power consumption of the user equipment, making the user equipment more applicable to the 5G NR-lite system. With the above method, the network device determines the default BWP to which the user equipment is to be switched, so as to achieve communication with the user equipment with the switched BWP.

Embodiments of the present invention provide a method for configuring a bandwidth part, which is performed by a network device. FIG. 8 is a schematic flowchart showing a method for configuring a bandwidth part according to an illustrative embodiment. As shown in FIG. 8, the method includes a flowing step.

In step 801, in response to a user equipment being configured with a plurality of initial downlink bandwidth parts (BWPs), one of the plurality of initial downlink BWPs is determined as the default BWP according to configuration of an uplink BWP of the user equipment. The default BWP is a target BWP to which the user equipment is to be switched in response to expiration of a first timer.

In an embodiment, in a scenario where the user equipment is configured with a plurality of initial downlink BWPs, the network device determines one of the plurality of initial downlink BWPs as the default BWP according to the configuration of the uplink BWP of the user equipment. The default BWP is the target BWP to which the user equipment is to be switched in a scenario where the first timer expires.

In an embodiment, the communication system is a time division duplex (TDD) based system, and when the user equipment performs BWP switching, both the uplink BWP and the downlink BWP need to be switched. Therefore, in the scenario where the user equipment is configured with a plurality of initial downlink BWPs, the network device determines one of the plurality of initial downlink BWPs as the default BWP according to the configuration of the uplink BWP of the user equipment. The default BWP is the target BWP to which the user equipment is to be switched in the scenario where the first timer expires. In this scenario, the default BWP and the target BWP both refer to a downlink BWP to which the user equipment is to be switched. In this scenario, the default BWP and the target BWP both refer to a downlink BWP to which the user equipment is to be switched.

In the above embodiments, when the user equipment does not receive the DCI for scheduling for a long time, it switches to an initial downlink BWP with a narrower bandwidth, which can reduce the power consumption of the user equipment, making the user equipment more applicable to the 5G NR-lite system. In the scenario where the user equipment is configured with a plurality of initial downlink BWPs, the network device determines the default BWP to which the user equipment is to be switched according to the configuration of the uplink BWP of the user equipment. With the above method, the network device determines the default BWP to which the user equipment is to be switched, so as to achieve communication with the user equipment with the switched BWP.

Embodiments of the present invention provide a method for configuring a bandwidth part, which is performed by a network device. FIG. 9 is a schematic flowchart showing a method for configuring a bandwidth part according to an illustrative embodiment. As shown in FIG. 9, the method includes a flowing step.

In step 901, in response to a user equipment being configured with a plurality of initial downlink bandwidth parts (BWPs), and the user equipment being configured with one initial uplink BWP, a corresponding first initial downlink BWP is determined according to a correspondence between the initial uplink BWP and the initial downlink BWP. The first initial downlink BWP is the default BWP. The first initial downlink BWP is one of the plurality of initial downlink BWPs; and the default BWP is a target BWP to which the user equipment is to be switched in response to expiration of a first timer.

In some possible implementations, the user equipment may determine the default BWP according to the correspondence between the initial uplink BWP and the initial downlink BWP. For example, based on a correspondence configured by the network side, or based on a corresponding correspondence, or based on a correspondence determined by a communication protocol; the user equipment can determine the first initial downlink BWP according to the correspondence, and use the first initial downlink BWP as the default BWP.

In an embodiment, in a scenario where the user equipment is configured with a plurality of initial downlink BWPs, and the user equipment is configured with one initial uplink BWP, the network device determines the first initial downlink BWP that has a correspondence with the initial uplink BWP as the default BWP. The default BWP is the target BWP to which the user equipment is to be switched in a scenario where the first timer expires. Here, the first initial downlink BWP is one of the plurality of initial downlink BWPs, and the first initial downlink BWP does not indicate its order in the plurality of initial downlink BWPs.

In an embodiment, in a scenario where the user equipment is configured with a plurality of initial downlink BWPs, and the user equipment is configured with one initial uplink BWP, the network device determines one of the plurality of initial downlink BWPs that has the same center frequency point as the initial uplink BWP as the default BWP. The default BWP is the target BWP to which the user equipment is to be switched when the first timer expires.

In an embodiment, in a scenario where the user equipment is configured with a plurality of initial downlink BWPs, and the user equipment is configured with one initial uplink BWP, the network device determines one of the plurality of initial downlink BWPs that has a following relationship with the initial uplink BWP as the default BWP: the initial uplink BWP includes a random access channel configured for the user equipment for sending random access information, and the initial downlink BWP includes a physical layer channel and a random access search space configured for the user equipment. The physical layer channel is used to carry a random access response corresponding to the random access information. The default BWP is the target BWP to which the user equipment is to be switched when the first timer expires.

In the above embodiments, when the user equipment does not receive the DCI for scheduling for a long time, it switches to an initial downlink BWP with a narrower bandwidth, which can reduce the power consumption of the user equipment, making the user equipment more applicable to the 5G NR-lite system. In the scenario where the user equipment is configured with a plurality of initial downlink BWPs, the network device determines the default BWP to which the user equipment is to be switched according to the configuration of the uplink BWP of the user equipment. With the above method, the network device determines the default BWP to which the user equipment is to be switched, so as to achieve communication with the user equipment with the switched BWP.

Embodiments of the present invention provide a method for configuring a bandwidth part, which is performed by a network device. FIG. 10 is a schematic flowchart showing a method for configuring a bandwidth part according to an illustrative embodiment. As shown in FIG. 10, the method includes a flowing step.

In step 1001, in response to a user equipment being configured with a plurality of initial downlink bandwidth parts (BWPs), and the plurality of initial downlink BWPs including an initial downlink BWP configured by the network device via a master information block (MIB), the initial downlink BWP configured via the MIB is determined as the default BWP. The default BWP is a target BWP to which the user equipment is to be switched in response to expiration of a first timer.

In an embodiment, in a scenario where the user equipment is configured with a plurality of initial downlink BWPs, and the plurality of initial downlink BWPs include an initial downlink BWP configured by the network device via the master information block (MIB), the network device determines the initial downlink BWP configured via the MIB as the default BWP according to the configuration of the uplink BWP of the user equipment. The default BWP is the target BWP to which the user equipment is to be switched when the first timer expires.

In an embodiment, the communication system is an FDD-based system, and in a scenario where the user equipment is configured with a plurality of initial downlink BWPs, and the plurality of initial downlink BWPs include an initial downlink BWP configured by the network device via the master information block (MIB), the network device determines the initial downlink BWP configured via the MIB as the default BWP according to the configuration of the uplink BWP of the user equipment. The default BWP is the target BWP to which the user equipment is to be switched when the first timer expires.

In the above embodiments, when the user equipment does not receive the DCI for scheduling for a long time, it switches to an initial downlink BWP with a narrower bandwidth, which can reduce the power consumption of the user equipment, making the user equipment more applicable to the 5G NR-lite system. In the scenario where the user equipment is configured with a plurality of initial downlink BWPs, the network device determines the default BWP to which the user equipment is to be switched according to the configuration of the uplink BWP of the user equipment. With the above method, the network device determines the default BWP to which the user equipment is to be switched, so as to achieve communication with the user equipment with the switched BWP.

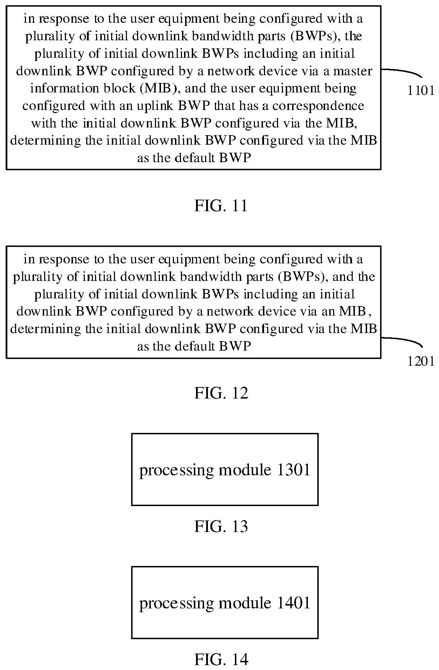

Embodiments of the present invention provide a method for configuring a bandwidth part, which is performed by a network device. FIG. 11 is a schematic flowchart showing a method for configuring a bandwidth part according to an illustrative embodiment. As shown in FIG. 11, the method includes a flowing step.

In step 1101, in response to a user equipment being configured with a plurality of initial downlink bandwidth parts (BWPs), the plurality of initial downlink BWPs including an initial downlink BWP configured by the network device via a master information block (MIB), and the user equipment being configured with an uplink BWP that has a correspondence with the initial downlink BWP configured via the MIB, the initial downlink BWP configured via the MIB is determined as a default BWP. The default BWP is a target BWP to which the user equipment is to be switched in response to expiration of a first timer.

The correspondence may be as described in other embodiments of the present invention, and will not be elaborated here.

In an embodiment, in a scenario where the user equipment is configured with a plurality of initial downlink BWPs, and the plurality of initial downlink BWPs include an initial downlink BWP configured by the network device via the master information block (MIB), when the user equipment is configured with an uplink BWP that has a correspondence with the initial downlink BWP configured via the MIB, the network device determines the initial downlink BWP configured via the MIB as the default BWP. The default BWP is the target BWP to which the user equipment is to be switched when the first timer expires.

In an embodiment, the communication system is an FDD-based system. In a scenario where the user equipment is configured with a plurality of initial downlink BWPs, and the plurality of initial downlink BWPs include an initial downlink BWP configured by the network device via the master information block (MIB), when the user equipment is configured with an uplink BWP that has a correspondence with the initial downlink BWP configured via the MIB, the network device determines the initial downlink BWP configured via the MIB as the default BWP. The correspondence is that the initial downlink BWP configured via the MIB and the uplink BWP have the same center frequency point. The default BWP is the target BWP to which the user equipment is to be switched when the first timer expires.

In an embodiment, the communication system is an FDD-based system. In a scenario where the user equipment is configured with a plurality of initial downlink BWPs, and the plurality of initial downlink BWPs include an initial downlink BWP configured by the network device via the master information block (MIB), when the user equipment is configured with an uplink BWP that has a correspondence with the initial downlink BWP configured via the MIB, the network device determines the initial downlink BWP configured via the MIB as the default BWP. The correspondence is that the initial uplink BWP includes a random access channel configured for the user equipment for sending random access information, and the initial downlink BWP configured via the MIB includes a physical layer channel and a random access search space configured for the user equipment. The physical layer channel is used to carry a random access response corresponding to the random access information.

In the above embodiments, when the user equipment does not receive the DCI for scheduling for a long time, it switches to an initial downlink BWP with a narrower bandwidth, which can reduce the power consumption of the user equipment, making the user equipment more applicable to the 5G NR-lite system. In the scenario where the user equipment is configured with a plurality of initial downlink BWPs, the network device determines the default BWP to which the user equipment is to be switched according to the configuration of the uplink BWP of the user equipment. With the above method, the network device determines the default BWP to which the user equipment is to be switched, so as to achieve communication with the user equipment with the switched BWP.

Embodiments of the present invention provide a method for configuring a bandwidth part, which is performed by a network device. FIG. 12 is a schematic flowchart showing a method for configuring a bandwidth part according to an illustrative embodiment. As shown in FIG. 12, the method includes a flowing step.

In step 1201, in response to the user equipment being configured with a plurality of initial downlink bandwidth parts (BWPs), and the plurality of initial downlink BWPs including an initial downlink BWP configured by the network device via an MIB, the initial downlink BWP configured via the MIB is determined as the default BWP. The default BWP is a target BWP to which the user equipment is to be switched in response to expiration of a first timer.

In an embodiment, in a scenario where the user equipment is configured with a plurality of initial downlink bandwidth parts (BWPs), and the plurality of initial downlink BWPs include an initial downlink BWP configured by the network device via the master information block (MIB), the network device determines the initial downlink BWP configured via the MIB as the default BWP. The default BWP is the target BWP to which the user equipment is to be switched when the first timer expires.

In an embodiment, the communication system is a frequency division duplex (FDD)-based system, and the user equipment does not need to switch the uplink BWP when performing BWP switching. Therefore, in a scenario where the user equipment is configured with a plurality of initial downlink BWPs, and the plurality of initial downlink BWPs include an initial downlink BWP configured by the network device via the master information block (MIB), the network device determines the initial downlink BWP configured via the MIB as the default BWP. The default BWP is the target BWP to which the user equipment is to be switched when the first timer expires. In this scenario, there is no need to determine the default BWP according to the configuration of the uplink BWP of the user equipment.

In the above embodiments, when the user equipment does not receive the DCI for scheduling for a long time, it switches to an initial downlink BWP with a narrower bandwidth, which can reduce the power consumption of the user equipment, making the user equipment more applicable to the 5G NR-lite system. With the above method, the network device determines the default BWP to which the user equipment is to be switched, so as to achieve communication with the user equipment with the switched BWP.

Embodiments of the present invention provide a method for configuring a bandwidth part. The method is performed by a network device, and includes: in response to a user equipment being configured with a plurality of initial downlink bandwidth parts (BWPs), one of the plurality of initial downlink BWPs is determined as a default BWP. The default BWP is a target BWP to which the user equipment is to be switched in response to expiration of a first timer. The first timer is used to time a duration during which the user equipment does not receive downlink control information for scheduling on an active BWP.

In an embodiment, in a case where the duration during which the user equipment does not receive the downlink control information (DCI) for scheduling on the active BWP reaches a specified range of time, in response to the user equipment being configured with a plurality of initial downlink BWPs, the network device determines one of the plurality of initial downlink BWPs as the default BWP, and switches to the determined default BWP.

In an embodiment, the first timer is a BWP-inactivity timer. For the functions of the first timer, reference can be made to the descriptions of other embodiments of the present invention, which will not be repeated here.

In the above embodiments, when the user equipment does not receive the DCI for scheduling for a long time, it switches to an initial downlink BWP with a narrower bandwidth, which can reduce the power consumption of the user equipment, making the user equipment more applicable to the 5G NR-lite system. With the above method, the network device determines the default BWP to which the user equipment is to be switched, so as to achieve communication with the user equipment with the switched BWP.

Embodiments of the present invention provide an apparatus for configuring a bandwidth part, which is applicable to a user equipment. Referring to FIG. 13, the apparatus includes a processing module 1301. The processing module 1301 is configured to: in response to the user equipment being configured with a plurality of initial downlink bandwidth parts (BWPs), determine one of the plurality of initial downlink BWPs as a default BWP. The default BWP is a target BWP to which the user equipment is to be switched to in response to expiration of a first timer.

Embodiments of the present invention provide an apparatus for configuring a bandwidth part, which is applicable to a network device. Referring to FIG. 14, the apparatus includes a processing module 1401. The processing module 1401 is configured to: in response to a user equipment being configured with a plurality of initial downlink bandwidth parts (BWPs), determine one of the plurality of initial downlink BWPs as a default BWP. The default BWP is a target BWP to which the user equipment is to be switched to in response to expiration of a first timer.

Embodiments of the present invention provide a mobile terminal, which includes: a processor; and a memory for storing instructions executable by the processor. The processor is configured to execute the executable instructions in the memory to implement the steps of the method for configuring a bandwidth part as described above.

Embodiments of the present invention provide a network device, which includes: a processor; and a memory for storing instructions executable by the processor. The processor is configured to execute the executable instructions in the memory to implement the steps of the method for configuring a bandwidth part as described above.

Embodiments of the present invention provide a non-transitory computer-readable storage medium having stored therein executable instructions that, when executed by a processor, cause the steps of the method for configuring a bandwidth part as described above to be implemented.

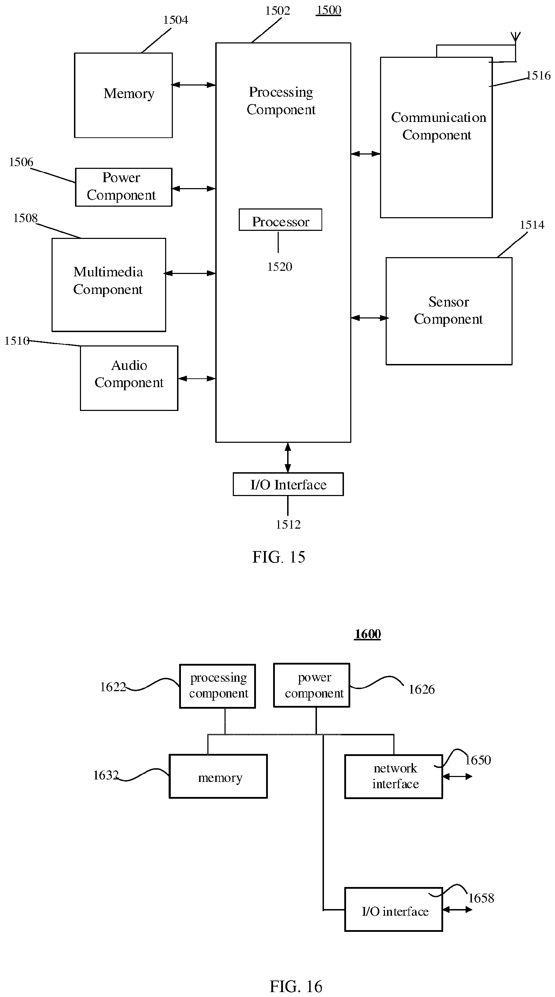

FIG. 15 is a schematic block diagram of an apparatus 1500 for configuring a bandwidth part according to an illustrative embodiment. For example, the apparatus 1500 may be a mobile phone, a computer, a digital broadcast terminal, a messaging device, a game console, a tablet device, a medical device, a fitness device, a personal digital assistant, or the like.

Referring to FIG. 15, the apparatus 1500 may include one or more of the following components: a processing component 1502, a memory 1504, a power component 1506, a multimedia component 1508, an audio component 1510, an input/output (I/O) interface 1512, a sensor component 1514, and a communication component 1516.

The processing component 1502 typically controls overall operations of the apparatus 1500, such as the operations associated with display, phone calls, data communications, camera operations, and recording operations. The processing component 1502 can include one or more processors 1520 to execute instructions to perform all or some of the steps in the above-described methods. Moreover, the processing component 1502 may include one or more modules which facilitate the interaction between the processing component 1502 and other components. For instance, the processing component 1502 may include a multimedia module to facilitate the interaction between the multimedia component 1508 and the processing component 1502.

The memory 1504 is configured to store various types of data to support the operation of the apparatus 1500. Examples of such data include instructions for any applications or methods operated on the apparatus 1500, contact data, phonebook data, messages, pictures, videos, etc. The memory 1504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1506 provides power to various components of the apparatus 1500. The power component 1506 may include a power management system, one or more power sources, and any other components associated with the generation, management, and distribution of power in the apparatus 1500.

The multimedia component 1508 includes a screen providing an output interface between the apparatus 1500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1508 includes a front camera and/or a rear camera. The front camera and/or the rear camera may receive an external multimedia datum while the apparatus 1500 is in an operation mode, such as a photographing mode or a video mode. Each of the front camera and the rear camera may be a fixed optical lens system or have focus and optical zoom capability.

The audio component 1510 is configured to output and/or input audio signals. For example, the audio component 1510 includes a microphone (MIC) configured to receive an external audio signal when the apparatus 1500 is in an operation mode, such as a call mode, a recording mode, and a voice recognition mode. The received audio signal may be further stored in the memory 1504 or transmitted via the communication component 1516. In some embodiments, the audio component 1510 further includes a speaker to output audio signals.

The I/O interface 1512 provides an interface between the processing component 1502 and peripheral interface modules, such as keyboards, click wheels, buttons, and the like. The buttons may include, but are not limited to, a home button, a volume button, a starting button, and a locking button.

The sensor component 1514 includes one or more sensors to provide status assessments of various aspects of the apparatus 1500. For instance, the sensor component 1514 may detect an open/closed status of the apparatus 1500, relative positioning of components, e.g., the display and the keypad, of the apparatus 1500, a change in position of the apparatus 1500 or a component of the apparatus 1500, a presence or absence of user contact with the apparatus 1500, an orientation or an acceleration/deceleration of the apparatus 1500, and a change in temperature of the apparatus 1500. The sensor component 1514 may include a proximity sensor configured to detect the presence of nearby objects without any physical contact. The sensor component 1514 may further include a light sensor, such as a CMOS or CCD image sensor, for use in imaging applications. In some embodiments, the sensor component 1514 may further include an accelerometer sensor, a gyroscope sensor, a magnetic sensor, a pressure sensor, or a temperature sensor.

The communication component 1516 is configured to facilitate communication, wired or wireless, between the apparatus 1500 and other devices. The apparatus 1500 can access a wireless network based on a communication standard, such as Wi-Fi, 2G, or 3G, or a combination thereof. In an illustrative embodiment, the communication component 1516 receives a broadcast signal or broadcast associated information from an external broadcast management system via a broadcast channel. In an illustrative embodiment, the communication component 1516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the apparatus 1500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the method described above.

In illustrative embodiments, there is also provided a non-transitory computer readable storage medium including instructions, such as included in the memory 1504, executable by the processor 1520 in the apparatus 1500, for completing the above method. For example, the non-transitory computer-readable storage medium may be a ROM, a random access memory (RAM), a CD-ROM, a magnetic tape, a floppy disc, an optical data storage device, and the like.

FIG. 16 is a schematic block diagram of an apparatus 1600 for configuring a bandwidth part according to an illustrative embodiment. For example, the apparatus 1600 may be provided as a base station. Referring to FIG. 16, the apparatus 1600 includes a processing component 1622, and a memory resource represented by a memory 1632 for storing instructions executable by the processing component 1622, such as application programs. The processing component 1622 further includes one or more processors. The application programs stored in the memory 1632 may include one or more modules each corresponding to a set of instructions. In addition, the processing component 1622 is configured to execute instructions to perform the above method for accessing an unlicensed channel.

The apparatus 1600 may further include a power component 1626 configured to perform power management of the apparatus 1600, a wired or wireless network interface 1650 configured to connect the apparatus 1600 to a network, and an input-output (I/O) interface 1659. The apparatus 1600 can operate based on an operating system stored in the memory 1632, such as Windows ServerTM, Mac OS XTM, UnixTM, LinuxTM, FreeBSDTM or the like.

Other implementations of embodiments of the present invention will be apparent to those skilled in the art from consideration of the specification and practice of the present invention disclosed here. The present invention is intended to cover any variations, uses, or adaptations of embodiments of the present invention following the general principles thereof and including such departures from the present invention as come within known or customary practice in the art. It is intended that the specification and embodiments be considered as illustrative only, with a true scope and spirit of embodiments of the present invention being indicated by the following claims.

It will be appreciated that embodiments of the present invention are not limited to the exact construction that has been described above and illustrated in the accompanying drawings, and that various modifications and changes can be made without departing from the scope thereof. It is intended that the scope of embodiments of the present invention only be limited by the appended claims.

### Industrial Applicability

By determining the default BWP to which the user equipment is to be switched, when the user equipment does not receive DCI for scheduling for a long time, it switches to an initial downlink BWP with a narrower bandwidth, which can reduce the power consumption of the user equipment, making it more applicable to the 5G NR-lite system.

## Claims

1. A method for configuring a bandwidth part, performed by a user equipment, comprising:
in response to the user equipment being configured with a plurality of initial downlink bandwidth parts (BWPs), determining one of the plurality of initial downlink BWPs as a default BWP;
wherein the default BWP is a target BWP to which the user equipment is to be switched in response to expiration of a first timer.

2. The method according to claim 1, wherein determining one of the plurality of initial downlink BWPs as the default BWP comprises:
determining one of the plurality of initial downlink BWPs as the default BWP according to configuration of an uplink BWP of the user equipment.

3. The method according to claim 2, wherein determining one of the plurality of initial downlink BWPs as the default BWP comprises:
in response to the user equipment being configured with one initial uplink BWP, determining a first initial downlink BWP that has a correspondence with the initial uplink BWP as the default BWP,
wherein the first initial downlink BWP is one of the plurality of initial downlink BWPs.

4. The method according to claim 3, wherein the correspondence is that the initial uplink BWP and the first initial downlink BWP have the same center frequency point.

5. The method according to claim 3, wherein the correspondence is that the initial uplink BWP comprises a random access channel configured for the user equipment for sending random access information, and the first initial downlink BWP comprises a physical layer channel and a random access search space configured for the user equipment;
wherein the physical layer channel is used to carry a random access response corresponding to the random access information.

6. The method according to claim 2, wherein determining one of the plurality of initial downlink BWPs as the default BWP comprises:
in response to the plurality of initial downlink BWPs comprising an initial downlink BWP configured by a network device via a master information block (MIB), determining the initial downlink BWP configured via the MIB as the default BWP.

7. The method according to claim 6, wherein determining the initial downlink BWP configured via the MIB as the default BWP comprises:
in response to the user equipment being configured with an uplink BWP that has a correspondence with the initial downlink BWP configured via the MIB, determining the initial downlink BWP configured via the MIB as the default BWP.

8. The method according to claim 7, wherein the correspondence is that the uplink BWP and the initial downlink BWP configured via the MIB have the same center frequency point.

9. The method according to claim 7, wherein the correspondence is that the uplink BWP comprises a random access channel configured for the user equipment for sending random access information, and the initial downlink BWP configured via the MIB comprises a physical layer channel and a random access search space configured for the user equipment;
wherein the physical layer channel is used to carry a random access response corresponding to the random access information.

10. The method according to claim 1, wherein determining one of the plurality of initial downlink BWPs as the default BWP comprises:
in response to the plurality of initial downlink BWPs comprising an initial downlink BWP configured by a network device via an MIB, determining the initial downlink BWP configured via the MIB as the default BWP.

11. The method according to claim 1, wherein the first timer is used to time a duration during which the user equipment does not receive downlink control information for scheduling on an active BWP.

12. A method for configuring a bandwidth part, performed by a network device, comprising:
in response to a user equipment being configured with a plurality of initial downlink bandwidth parts (BWPs), determining one of the plurality of initial downlink BWPs as a default BWP;
wherein the default BWP is a target BWP to which the user equipment is to be switched in response to expiration of a first timer.

13. The method according to claim 12, wherein determining one of the plurality of initial downlink BWPs as the default BWP comprises:
determining one of the plurality of initial downlink BWPs as the default BWP according to configuration of an uplink BWP of the user equipment.

14. The method according to claim 13, wherein determining one of the plurality of initial downlink BWPs as the default BWP comprises:
in response to the user equipment being configured with one initial uplink BWP, determining a first initial downlink BWP that has a correspondence with the initial uplink BWP as the default BWP,
wherein the first initial downlink BWP is one of the plurality of initial downlink BWPs.

15. The method according to claim 14, wherein the correspondence is that the initial uplink BWP and the first initial downlink BWP have the same center frequency point.

16. The method according to claim 14, wherein the correspondence is that the initial uplink BWP comprises a random access channel configured for the user equipment for sending random access information, and the first initial downlink BWP comprises a physical layer channel and a random access search space configured for the user equipment;
wherein the physical layer channel is used to carry a random access response corresponding to the random access information.

17. The method according to claim 13, wherein determining one of the plurality of initial downlink BWPs as the default BWP comprises:
in response to the plurality of initial downlink BWPs comprising an initial downlink BWP configured by the network device via a master information block (MIB), determining the initial downlink BWP configured via the MIB as the default BWP.

18. The method according to claim 17, wherein determining the initial downlink BWP configured via the MIB as the default BWP comprises:
in response to the user equipment being configured with an uplink BWP that has a correspondence with the initial downlink BWP configured via the MIB, determining the initial downlink BWP configured via the MIB as the default BWP.

19. The method according to claim 18, wherein the correspondence is that the uplink BWP and the initial downlink BWP configured via the MIB have the same center frequency point.

20. The method according to claim 18, wherein the correspondence is that the uplink BWP comprises a random access channel configured for the user equipment for sending random access information, and the initial downlink BWP configured via the MIB comprises a physical layer channel and a random access search space configured for the user equipment;
wherein the physical layer channel is used to carry a random access response corresponding to the random access information.

21. The method according to claim 12, wherein determining one of the plurality of initial downlink BWPs as the default BWP comprises:
in response to the plurality of initial downlink BWPs comprising an initial downlink BWP configured by the network device via an MIB, determining the initial downlink BWP configured via the MIB as the default BWP.

22. The method according to claim 12, wherein the first timer is used to time a duration during which the user equipment does not receive downlink control information for scheduling on an active BWP.

23. An apparatus for configuring a bandwidth part, applicable to a user equipment, comprising:
a processing module, configured to: in response to the user equipment being configured with a plurality of initial downlink bandwidth parts (BWPs), determine one of the plurality of initial downlink BWPs as a default BWP;
wherein the default BWP is a target BWP to which the user equipment is to be switched in response to expiration of a first timer.

24. An apparatus for configuring a bandwidth part, applicable to a network device, comprising:
a processing module, configured to: in response to a user equipment being configured with a plurality of initial downlink bandwidth parts (BWPs), determine one of the plurality of initial downlink BWPs as a default BWP;
wherein the default BWP is a target BWP to which the user equipment is to be switched in response to expiration of a first timer.

25. A mobile terminal, comprising:
a processor; and
a memory, for storing instructions executable by the processor,
wherein the processor is configured to execute the executable instructions in the memory to implement the steps of the method for configuring a bandwidth part according to any one of claims 1 to 11.

26. A network device, comprising:
a processor; and
a memory, for storing instructions executable by the processor,
wherein the processor is configured to execute the executable instructions in the memory to implement the steps of the method for configuring a bandwidth part according to any one of claims 12 to 22.

27. A non-transitory computer-readable storage medium having stored therein executable instructions that, when executed by a processor, cause the steps of the method for configuring a bandwidth part according to any one of claims 1 to 11 or the steps of the method for configuring a bandwidth part according to any one of claims 12 to 22 to be implemented.
